# EUROPÄISCHE PATENTANMELDUNG

(11) **EP 3 358 253 A1**
(43) Veröffentlichungstag der Anmeldung: **08.08.2018**
(21) Anmeldenummer: 18154896.7
(22) Anmeldetag: 02.02.2018
(51) Int. Cl.: F23G 5/027, F23G 7/10

(54) **VERKOHLUNGSANLAGE**

(30) Priorität: 06.02.2017 AT 500952017
(71) Anmelder: HERZ Energietechnik GmbH, 7423 Pinkafeld (AT)
(72) Erfinder: Fesharaki, Morteza, 8074 Raaba bei Graz (AT); Rath, Wolfgang, 7551 Bocksdorf (AT)
(74) Vertreter: Wildhack & Jellinek

(57) **Zusammenfassung**

Die Erfindung betrifft eine neue Anlage (100) für die Vergasung von Pflanzenmaterial und für die gleichzeitige Herstellung von Pflanzenkohle (b) die Anlage mit einem schrägen Rohrreaktor (3) mit rotierender nach aufwärts hin ansteigende Ganghöhen (g) aufweisender Förderschnecke (3a) und Vorratsbehälter (3d) für das Pflanzenmaterial (a) am unteren Ende (31) gebildet ist, und wobei am oberen Ende (32) des Rohrreaktors (3) eine auf eine Temperatur von 350 bis 1000 °C gebrachte Verkohlungskammer (4) mit mittels Förderschnecke (3a) mit vorerhitztem pyrolysiertem Pflanzenmaterial (a') zu beaufschlagendem, schräg abwärts ausgerichtetem, für eine Rundumverbrennungsluftzufuhr vorgesehenen, Rohrrost (4a) mit Luftzuführöffnungen (4b) anschließt, und wobei die dort gebildeten, heißen Gase (c) zusammen mit den in der Pyrolysezone (II) gebildeten Pyrolysegasen (c1) über eine aus dem Rohrreaktor (3) ausmündende Gasabführleitung (3e) durch das die Pyrolysezone (II) passierende, dort porös und locker werdende, Pyrolysematerial (a'), in entgegengesetzter Richtung (R2) hindurch saugbar und einer Weiterverwertung zuführbar sind, und wobei gewünschtenfalls die generierte Pflanzenkohle (b) über eine Austragsschleuse (5a) ausbringbar ist.

## Beschreibung

Die vorliegende Erfindung betrifft eine neue Anlage für die Vergasung von, und gewünschtenfalls für die gleichzeitige Herstellung von Pflanzenkohle, aus pflanzlichem Material, insbesondere Holz.

Bekannt geworden sind schon verschiedene Pflanzenkohleerzeugungsanlagen welche nach unterschiedlichen Technologien arbeiten.

So ist eine derartige Anlage der Fa. Pyreg GmbH mit einer Brennstoffleistung von 500 kW in Serie beschrieben worden, welche nach dem Gleichstrom-Verkohlungsprinzip arbeitet:
Über eine Zellradschleuse wird die zu verkohlende Biomassel ohne Luftzufuhr in den Reaktor eingebracht, in welchem sie auf 500 bis 600°C erhitzt wird. Die entstehenden Gase werden abgesaugt. Bevor dieselben in einer separaten Brennkammer bei etwa 1250°C vollständig verbrannt werden, werden sie in einem Zyklon von Pflanzenkohlepartikeln gereinigt. Der Transport der festen Biomasse erfolgt mittels Doppelwellenschnecke, die eine gute Durchmischung der zu verkohlenden Biomasse sicherstellt. Während des Durchlaufs der Doppelwellenschnecke wird die Biomasse zu Pflanzenkohle verkohlt. Bevor dieselbe ausgetragen wird, wird sie mit Wasser abgelöscht, was einen sicheren Transport der Pflanzenkohle gewährleistet. Es entstehen keine Belastungen der erzeugten Pflanzenkohle durch Teere oder Kondensate, da die Gase und die Pflanzenkohle im Reaktor nicht abgekühlt werden, sondern mit hoher Temperatur aus der Verkohlungszone austreten.

Das aus der Brennkammer austretende Rauchgas wird in einem zweiten Zyklon gereinigt, bevor es die Prozesswärme für den Reaktor über ein Doppelmantelrohr bereitstellt. Mit dem aus dem Reaktor austretenden Rauchgas kann noch ein Wärmeüberträger mit einer thermischen Leistung von bis zu 150 kW betrieben werden, bevor das Rauchgas über einen Kamin abgeleitet wird.

Die Anlage benötigt nur beim Anfahren zusätzliche Hilfsenergie, z.B. mittels Erdgas-Gasbrenner, in der Brennkammer. Im stationären Betrieb wird kein Erdgas benötigt und der Verkohlungsprozess ist autotherm, wenn die zu verkohlende Biomasse einen Heizwert von mindestens 10 MJ/kg besitzt. Es kann damit Pflanzenkohle nach der European Biochar Certificate (EBC)-Richtlinie erzeugt werden.

Des Weiteren ist der so genannte Schottdorf-Meiler der Fa. Carbon Terra GmbH mit einer Brennstoffleistung von 1000 kW bekannt geworden. Mittels senkrechtem Gegenstrom-Verkohlungsprinzip kann Pflanzenkohle mit der Qualitätsstufe "premium" gemäß EBC-Richtlinien erzeugt werden.

Der hierbei eingesetzte Meiler ist ein Wanderschichtreaktor, in dem das Brennstoff-Eingangsmaterial durch Wirkung der Schwerkraft nach unten wandert und das erzeugte Synthesegas im Gegenstrom durch die Biomasse hindurch nach oben strömt. Hierbei werden weiter höher liegende Schichten Biomasse getrocknet. Dadurch kann dieselbe mit einem Feuchtigkeitsgehalt von bis zu 40% problemlos zu Pflanzenkohle verarbeitet werden. Weiters wirkt der Wanderbettreaktor als Staubfilter, sodass keine Probleme mit Staubemissionen auftreten.

Das Eingangsmaterial wird von oben in den Meiler eingeführt und durchläuft dann drei Zonen, nämlich
- eine erste Trocknungszone, in welcher die feuchte Biomasse durch die bis zu 300°C heißen, aufsteigenden Gase getrocknet werden.
- Die zweite Zone ist die Flammzone, in der Flammtemperaturen von über 1000°C auftreten.
- In der dritten Zone, Glimmzone, wird die Temperatur mit Hilfe einer gesteuerten Luftzufuhr auf 500°C bis 600°C geregelt. Die Austragung der in der Glimmzone gebildeten Pflanzenkohle erfolgt mittels Schwerkraft. Die so hergestellte Pflanzenkohle weist hohe Porosität auf und wird mittels Druck der Biomasse von oben durch einen grobmaschigen Gitterrost gedrückt. Sie fällt schließlich ebenfalls in ein Wasserbad.

Für das Anfahren des Meilers wird ein Stützfeuer benötigt, im stationären Betrieb jedoch kommt auch dieses System ohne Fremdfeuerung aus.

Weiters bekannt geworden ist der "Compaktconverter" der Fa. Biomacon GmbH in mehreren Baugrößen, mit 25 bis 250 kW Leistung. Diese Technologie ermöglicht es, je nach Bedarf, Pflanzenkohle und Wärme oder ausschließlich Wärme zu erzeugen. Zusätzlich kann mit Hilfe der dort eingesetzten Regelung die Qualität der erzeugten Pflanzenkohle eingestellt werden. Die Qualität wird aber zu einem Großteil durch die Prozessführung selbst beeinflusst.

Bei dem Compaktconverter handelt es sich um einen waagrechten Gegenstrom-Verkohlungsreaktor, der ein autothermer Gegenstrom-Festbettvergaser mit interner Gaszirkulation ist. Um eine störungsfreie Verkohlung gewährleisten zu können, müssen ligninhaltige Brennstoffe mit einem maximalen Wassergehalt von 30% eingesetzt werden.

Der Verkohlungsprozess mit diesem Compaktconverter verläuft üblicherweise in den folgenden vier Phasen ab:
- Ein beheizter Spiralförderer befördert den ligninhaltigen Brennstoff aus einem Bunker bis zum Fallschacht eines Heißgasreformers. Durch die Beheizung des Spiralförderers wird sichergestellt, dass in den Heißgasreformer nur ausreichend trockener Brennstoff gelangt.
- Im Heißgasreformer wird das eingesetzte pflanzliche Material über einen langen Zeitraum Temperaturen von 450 bis 900°C ausgesetzt, um dessen vollständige Verkohlung zu gewährleisten. Die entstehenden Gase werden in einer oberhalb und seitlich des Heißgasreformers angeordneten Brennkammer verbrannt. Die Brennkammer ist mit Heißgas-Injektoren verbunden, die durch den Heißgasreformer geführt sind, sodass das entstandene heiße Abgas um die schwelende Biomasse herum geleitet wird.
- Die bei dem Gegenstromverkohlungsprozess frei werdende, überschüssige Wärme wird für Heizungszwecke eingesetzt.
- Nach dem Durchlaufen des Heißgasreformers wird die erzeugte Pflanzenkohle über eine Zellradschleuse ausgetragen und mit Wasser abgelöscht.

Mit dem beschriebenen Konverter kann Pflanzenkohle mit der Qualitätsstufe "basic" gemäß EBC-Richtlinien erzeugt werden.

Zuletzt sind Holzgaskraftwerke der Fa. SynCraft Engineering GmbH zu erwähnen, die mit Holzhackschnitzeln als Brennstoff betrieben werden und als primäres Ziel die Stromerzeugung haben, wobei als Nebenprodukt Pflanzenkohle entsteht. Die Holzgaskraftwerke haben eine Brennstoffleistung von 720 kW bis 1370 kW. Es handelt sich im Grunde um eine gestufte Gleichstrom-Vergasung mit Schwebebett, die entgegen der Schwerkraft arbeitet, was den Vorteil bietet, dass die Pflanzenkohleschüttung immer gelockert und gut gasdurchlässig bleibt. Ein Nachteil besteht hingegen im gering zu haltenden Massenanteil von Wasser von maximal 15%, den die Hackschnitzel für einen störungsfreien Betrieb aufweisen müssen.

Es handelt sich bei dieser Technologie um ein gestuftes Gleichstromverkohlungsprinzip.

Um das hier als Nebenprodukt angeführte Produkt Pflanzenkohle erzeugen zu können, werden folgende Prozessschritte durchlaufen:
- Die Holzhackschnitzel werden mittels Förderschnecke durch eine vertikale Pyrolyseeinheit befördert. Dabei werden sie bei unterstöchiometrischer Luftversorgung und Temperaturen von etwa 500°C in die beiden Komponenten Synthesegas und Pflanzenkohle umgesetzt.
- Die entstandenen Komponenten werden zu einem Schwebebettvergaser transportiert. Die Pflanzenkohle wird vor dem Eintritt in den Schwebebettreaktor mit Temperaturen um 850°C noch von Störstoffen gesäubert.
- Dort wird sie so lange vergast, bis sie von dem Synthesegasstrom mitgerissen wird.
- Die aus dem Schwebebettreaktor mitgerissenen Pflanzenkohlepartikel werden mittels Filter abgeschieden und mit Wasser abgelöscht. Es fallen bei einer Brennstoffleistung von 1000 kW pro Tag um die 3 m³ Pflanzenkohle mit der Qualitätsstufe "premium" nach den EBC-Richtlinien an.

Mit dem gestuften Gleichstrom-Festbettvergaser kann die Kontamination der Pflanzenkohle mit Teeren und PAK verhindert werden und gleichzeitig kann nachhaltig Strom mit dem Synthesegas produziert werden.

Die vorliegende Erfindung hat sich zum Ziel gesetzt eine hinsichtlich hochwertiger und hochreiner Synthesegase für die verschiedensten Verwendungen und vorzugsweise gleichzeitig höchstwertige Pflanzenkohle produzierende, in ihrem Aufbau einfach und störungsfrei funktionierende Anlage zu schaffen, welche sich durch hohe Effektivität auszeichnet.

Gegenstand der Erfindung ist eine wie eingangs genannte Anlage für die Vergasung von, und gewünschtenfalls für die gleichzeitige Herstellung von Pflanzenkohle, wobei pflanzliches Material, insbesondere Holz, nacheinander durch eine Trocknungszone und eine Pyrolysezone in eine Verkohlungszone führbar ist, in welcher mittels unterstöchiometrischer Verbrennung eines Teils des Materials unter Zufuhr von Primärluft bei Temperaturen von bis zu 1000°C, gewünschtenfalls unter Verkohlung eines restlichen Teils des Materials zu Pflanzenkohle, die Vergasung erfolgt, und die hierbei generierten, heißen Verbrennungs-, Verkohlungs- und Pyrolysegase dem zugeführten, pflanzlichen Material, insbesondere für dessen Erhitzung, entgegen führbar sind, welche **dadurch gekennzeichnet** ist,
- dass die Anlage mit einem schräg nach aufwärts gerichteten, rohrartigen Reaktor mit in demselben kontinuierlich rotierender, zumindest etwa ab dem Mittenbereich des Rohrreaktors nach aufwärts hin progressiv ansteigende Ganghöhen aufweisender Förderschnecke mit Vorratsbehälter für das pflanzliche Material und außenluft-dichter Eintragungsschleuse an ihrem unteren Ende gebildet ist,
- dass am oberen Ende des Rohrreaktors, wo auch die Förderschnecke endet, eine in ihrem Inneren auf eine Temperatur von 350 bis 1000 °C gebrachte Verkohlungskammer mit mittels der Förderschnecke mit vorerhitztem und zumindest teil-pyrolysiertem Pflanzenmaterial zu beaufschlagendem, schräg abwärts ausgerichtetem, für eine allseitige, Rundum-Verbrennungs- bzw. -Primärluftzufuhr zu dem Pflanzenmaterial vorgesehenen, Rohrrost, vorzugsweise mit quadratischem Querschnitt, und Luftzufuhröffnungen anschließt,
- dass die in der Verkohlungskammer gebildeten, heißen Verbrennungs- und Verkohlungsgase zusammen mit den in der Pyrolysezone des Rohrreaktors gebildeten Pyrolysegasen über eine aus dem Rohrreaktor, etwa in dessen Mittenbereich ausmündende Gasabführleitung durch das die Pyrolysezone in Materialförderrichtung passierende, dort porös und körnig locker werdende, pyrolisierte Material, in zur eben genannten Förderrichtung entgegengesetzter Richtung hindurch saugbar und einer jeweils gewünschten Weiterverwertung zuführbar sind, und
- dass gewünschtenfalls die in der Verkohlungskammer generierte, fein- bis feinstkörnig anfallende, hochporöse Pflanzenkohle über eine außenluft-dichte Austragsschleuse ausbringbar ist.

Mit dieser neu entwickelten, geneigten Gegenstrom-Verkohlungsanlage können kontinuierlich Pflanzenkohle und Synthesegase erzeugt werden, wobei das Ausmaß der Pflanzenkohleproduktion variabel ist und bis auf Null absinken kann.

Insbesondere im Sinne der Verhinderung einer Verstopfung des oberen Endes des Rohrreaktors und somit des Übergangs des pflanzlichen Materials in die Verkohlungszone ist vorgesehen, dass die Förderschnecke für das pflanzliche Material nur einseitig in einem am unteren Ende des Rohrreaktors angeordneten Getriebemotor für ihren Antrieb gelagert ist, wobei vorzugsweise vorgesehen ist, dass die Förderschnecke einen nur bis in den Mittenbereich derselben reichenden Kern aufweist.

Dies hat den Vorteil, dass im Pyrolysebereich wesentlich mehr Platz für das geförderte Pflanzenmaterial gegeben ist, was wesentlich zur Lockerung desselben in dieser Zone beiträgt.

Was die Neigung des Röhrenreaktors betrifft, so hat sich ein Winkel im Bereich von 10 bis 20° gegenüber der Horizontale als günstig erwiesen.

Mit dieser Schrägstellung wird einerseits eine effektive Förderung des Materials und andererseits eine ausreichend lange Verweilzeit desselben in der Trocknungs- und in der Pyrolysezone erreicht, wobei gleichzeitig eine, für beide eben genannten Vorgänge, vorteilhafte, kräftige Umwälzung und Vermischung des Materials erzielbar ist.

Als besonders vorteilhaft hat es sich erwiesen, wenn erfindungsgemäß dafür gesorgt ist, dass die gesamte Förderschnecke mit einem progressiv steigenden Ganghöhenverlauf zu ihrem oben liegenden Ende hin ausgebildet ist, wobei, insbesondere zur Vermeidung von Verstopfungen im Reaktor, die Ganghöhe vom unteren Ende der Förderschnecke bis zu deren oberen Ende hin in mehreren diskontinuierlichen Sprüngen um insgesamt 10 bis 25 % ansteigend ausgebildet ist. Dadurch, dass die Ganghöhen der Förderschnecken nach oben hin ansteigen, wird neben der Verhinderung von Verstopfungen vor Eintritt in die Verkohlungszone die Lockerung des pyrolisierten, und gleichzeitig hochporös werdenden Materials erreicht, was schließlich die Adsorptionsfähigkeit der mittels der erfindungsgemäßen Anlage produzierbaren Pflanzenkohle besonders anhebt.

Insbesondere, um höchste Feinstaub-, Teer- und Aschefreiheit der einer jeweils beliebigen Weiterverwendung zuzuführenden Synthesegase zu erzielen, ist es besonders bevorzugt, wenn die im Mittenbereich des Rohrreaktors aus demselben ausmündende Gasableitung mit einem Saugventilator für das Ab- bzw. Ansaugen der Verbrennungs-, Verkohlungs- und Pyrolysegase durch das die Pyrolysezone in Förderrichtung passierende und dort der Pyrolyse unterworfene, pflanzliche Material hindurch in Gegenrichtung zur Förderrichtung des Pflanzenmaterials ausgestattet ist.

Auf diese Weise wird erreicht, dass die in Gegenrichtung zur Förderrichtung des pflanzlichen Materials strömenden Verbrennungs-, Verkohlungs- und Pyrolysegase mittels des, insbesondere die Pyrolysezone des Rohrreaktors passierenden, als Biofilter wirksamen pflanzlichen Materials kontinuierlich von feinsten Staub- und Ascheteilchen befreibar sind.

Eine nicht unwichtige Folge der Schräganordnung des Reaktors mit der Förderschnecke besteht darin, dass die in der Verkohlungszone generierte, heiße Pflanzenkohle in Folge des Nachschiebens des pflanzlichen Materials mittels der Förderschnecke in Richtung zur Austragsschleuse hin transportierbar ist.

Für den Fall, dass keine Pflanzenkohle produziert werden soll, dass also das gesamte pflanzliche Material in Synthesegas für jeweils erforderliche Zwecke umgewandelt werden soll, hat es sich als günstig erweisen, für einen Aufbau der neuen Anlage zu sorgen, bei welchem innerhalb des die Verkohlungszone aufweisenden Raums ein Zusatzrost angeordnet ist, auf dem die in der Verkohlungszone generierte, heiße Pflanzenkohle im Falle des ausschließlichen Bedarfs an den erzeugten Verbrennungs-, Verkohlungs- und Pyrolysegasen vollständig bis auf den Aschegehalt verbrennbar sind, wobei die Asche über die außenluft-dichte Austragsschleuse ausbringbar ist.

Nicht zuletzt ist zu erwähnen, dass es insbesondere für die Feinkörnigkeit der erzeugten Pflanzenkohle günstig ist, wenn die die Verkohlungszone nach abwärts hin verlassende, dort generierte, heiße Pflanzenkohle nach Passieren einer außenluft-dichten Austragsschleuse, insbesondere zu deren Ablöschung in einen mit Wasser beschickten Behälter austragbar ist.

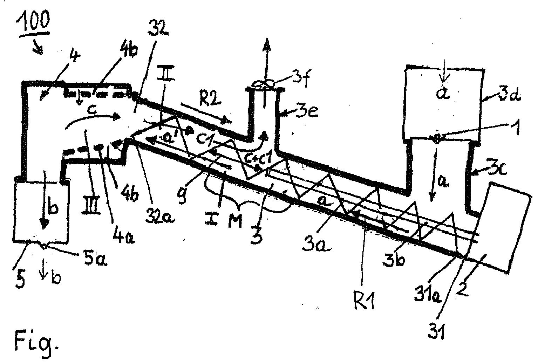

Anhand der Zeichnung wird die Erfindung näher erläutert:
Die Fig. zeigt schematisch die neue Verkohlungs- und Energiegasproduktionsanlage.

Schlüsselkomponente der Anlage 100 ist ein gegen die Horizontale geneigter, also schräg ansteigend angeordneter, Rohrreaktor 3 mit in ihm angeordneter, mittels Antriebsmotor 2 in Rotation versetzbarer Förderschnecke 3a, mit vom unteren Ende 31 des Reaktors 3 bis zu dessen oberen Ende 32, vorzugsweise in diskreten Stufen, ansteigender Schnecken - Ganghöhe g. Dem unteren Ende 31 des Reaktors entspricht das untere Ende 31a der Förderschnecke 3, dessen oberem Ende 32 entspricht das obere Ende 32a derselben.

In den Bereich des unteren Reaktor-Endes 31 mündet die Einfülleinrichtung 3d mit außenluft-dichter Zellradschleuse 1 und Füllschacht 3c, durch welche(n) das zu verkohlende pflanzliche Material a, vorzugsweise Holzschnitzel, einbringbar ist. Dieses Material a wird mittels der Förderschnecke 3 kontinuierlich in Förderrichtung R1 schräg nach aufwärts transportiert und gelangt hierbei zuerst in die Trocknungszone I und danach in die Pyrolysezone II, in welchen beiden Zonen Trocknung und dann Pyrolyse des Pflanzenmaterials a zum trockenen und pyrolysierten Pflanzenmaterial a' erfolgt.

Aus der Fig. ist noch ersichtlich, dass die Förderschnecke 3 einen Kern 3b aufweist, der vom Antrieb 2 etwa bis zum Beginn der Trocknungszone I etwa im Mittenbereich M des Rohrreaktors 3 reicht. Von diesem Mittenbereich M des Rohrreaktors 3 mündet ein Gasabzug 3e mit Gasabsaugeinrichtung, beispielsweise -ventilator, 3f aus.

Am oberen Ende 32 des Rohrreaktors 3 schließt - ebenfalls dicht gegen die Außenluft - die Verkohlungskammer 4 an, welche die Verkohlungszone III beinhaltet, wobei das hochgeförderte, pyrolisierte Pflanzenmaterial a' laufend in einen, beispielsweise Quadrat-Querschnitt aufweisenden, rohrartigen Rost 4a mit Lufteinlassöffnungen 4b, durch welche rundum, also von allen Seiten, gezielt Verbrennungs- also Primärluft in unterstöchiometrischen Mengen eingeblasen wird, eintritt und denselben durchläuft. Es erfolgt dort unter Verbrennung eines Teils des in die Verkohlungszone III einfließenden pyrolysierten Materials a' die Verkohlung des restlichen Pflanzenmaterials zur Pflanzenkohle b, welche in die Austragkammer 5 gelangt, von wo aus sie durch eine luftdichte Schleuse 5a, beispielsweise in ein Wasserbecken, austragbar ist.

Die in der Verkohlungszone III entstehenden Verkohlungsgase c und die in der Pyrolysezone II gebildeten Pyrolysegase c1 werden mittels des Absaugventilators 3f in Gegenrichtung R2 zur Pflanzenmaterialförderrichtung R1 durch das mittels der Förderschnecke 3 kontinuierlich nachgelieferte, pyrolisierte Pflanzenmaterial a' hindurchgesaugt und durch dessen Filtrationswirkung von mit den genannten Gasen mitgeführten feinsten Staub- und Ascheteilchen befreit. Diese Gase c + c1 können den verschiedensten Heiz-, Energie- und/oder Syntheseanlagen zugeführt werden.

Die wesentlichen Merkmale der erfindungsgemäßen Anlage 100 seien hier zusammengefasst:
- Die Reaktorschnecke 3a ist nur einseitig im Getriebemotor 2 gelagert.
- Die Reaktorschnecke 3a ist nicht bis in die Verkohlungszone III hinein geführt und hat einen progressiven Schneckengangverlauf, sodass der Transport des Materials a bzw. a' bis zum Rost 4a hin dasselbe progressiv auflockernd gestaltet ist.
- Die Reaktorschnecke 3a bietet sprunghafte Steigerungen des Platzangebots im Rohrreaktor 3, zumindest ab dem Bereich der Gasableitung 3e.
- Der Rohrreaktor 3 mit Förderschnecke 3a hat einen schräg nach oben gerichteten Neigungswinkel. Dadurch wird ein unkontrollierter Transport des Pflanzenmaterials a bzw. a' in die Verkohlungskammer 4 vermieden.
- Aus der Kombination von Neigungswinkel und progressivem Schneckengangverlauf wird eine kontinuierliche Lockerung des Materials a bzw. a' im Gegenstrombereich von Synthesegas c + c1 und Material a bzw. a' erreicht, da einerseits das Material a bzw. a' aufgrund der Schwerkraft zurückrieselt, aber andererseits der progressive Schneckengangverlauf dagegen wirkt. Hier befinden sich die Pyrolysezone II und die Trocknungszone I der Gegenstrom-Verkohlungsanlage 100.
- Im Gegenstrombereich des Rohrreaktors 3 wirkt das Material a' als Biofilter, der sich ständig erneuert und durch die Kombination aus Neigungswinkel der Förderung und progressivem Schneckengangverlauf den Rohrreaktor nicht verstopft. Es werden Teere und feinste Partikel von Asche und Staub ausgefiltert und auch sonstige Emissionen minimiert.
- Kurz vor dem Auswurf aus dem System erfolgt die Bildung der Pflanzenkohle b in der Verkohlungskammer 4. Die Verkohlung des Materials a bzw. a' zu Pflanzenkohle b erfolgt ausschließlich in der Verkohlungszone III, innerhalb in der Verkohlungskammer 4.
- Die gezielte unterstöchiometrische Zuführung der Primärluft erfolgt nur in der Verkohlungskammer 4. Dabei wird die Primärluft über mehrere Primärluftkanäle 4b pro Seite des Rosts 4a angesaugt. Die Primärluftkanäle 4b befinden sich im Rost 4a, also konkret in dessen ihn umschließenden Wandungen.

Der Transport der Pflanzenkohle b in der Verkohlungskammer 4 in Richtung Auswurfzellradschleuse 5a erfolgt mittels Nachschieben des Pyrolysematerials a' mittels der Reaktorschnecke 3a und des Rieselverhaltens des Pflanzenmaterials a bzw. a'. Der für den "geneigten" Gegenstrom-Verkohlungsprozess benötigte Unterdruck wird mittels Unterdruck erzeugender Systemkomponente 3f, z.B. Abgasventilator, bereitgestellt. Diese Unterdruck-Komponente 3f kann je nach realisiertem Prozess direkt nach der Gasableitung 3e oder an einer anderen Position der jeweils nachfolgenden gasführenden Komponenten verbaut werden.

Die mittels der erfindungsgemäßen Anlage 100 erzeugbare Pflanzenkohle b aus der geneigten Gegenstrom-Verkohlungsanlage 4 kann für folgende unterschiedliche Zwecke verwendet werden:
Die erzeugte Pflanzenkohle b kann in der Landwirtschaft als Futtermittelzusatz, als Silagehilfsmittel, als Einstreu und/oder für die Güllebehandlung eingesetzt werden. Durch die landwirtschaftliche Ausbringung von Pflanzenkohle b auf Felder wird klimaschädliches CO₂ in der Erde gespeichert und dadurch die Klimabilanz wesentlich verbessert. Die erzeugte Pflanzenkohle b kann weiters als Kompostzusatz in der Kompostherstellung, als Sorptionsmittel in Klär- und Filteranlagen, als Einstreu in Trocken- oder Trenntoiletten und als Ersatz für fossile Brennstoffe genützt werden. Die Pflanzenkohle b kann als Reduktionsmittel in der Metallurgie, für die Filtration von Gasen und Flüssigkeiten und für die Gewinnung von Farbstoffen, beispielsweise durch Adsorption, genützt werden.

Mit dem in der erfindungsgemäßen Anlage 100 erzeugbaren Synthesegas c bzw. c + c1 können weiters folgende Prozesse betrieben werden:
Das erzeugte Synthesegas c bzw. c + c1 wird in einer nachgeschalteten Brennkammer gezielt vollständig zu Rauchgas verbrannt, wobei das so erzeugte Heißgas für Trocknungszwecke direkt oder indirekt verwendet wird, oder
   es wird in einer nachgeschalteten Brennkammer gezielt vollständig zu Rauchgas verbrannt und ein Wärmeübertrager entzieht anschließend demselben Wärme für die Wärmebereitstellung in einem Heizsystem.

Weiters seien folgende Möglichkeiten genannt:
Eine ORC-Anlage nutzt das Wärmepotential im mittels der neuen Anlage 100 erzeugten Heißgas c + c1 für die Stromerzeugung.

Eine ORC-Anlage nutzt das Wärmepotential aus dem genannten Wärmeübertrager für die Stromerzeugung.

Das erzeugte Synthesegas c + c1 wird direkt für die Stromerzeugung in einen Gasmotor geleitet. Die Abwärme des Gasmotors kann letztlich ebenfalls genützt werden.

## Patentansprüche

1. Anlage (100) für die Vergasung von, und gewünschtenfalls für die gleichzeitige Herstellung von Pflanzenkohle (b), wobei pflanzliches Material (a), insbesondere Holz, nacheinander durch eine Trocknungszone (I) und eine Pyrolysezone (II) in eine Verkohlungszone (III) führbar ist, in welcher mittels unterstöchiometrischer Verbrennung eines Teils des Materials (a) unter Zufuhr von Primärluft bei Temperaturen von bis 1000 °C, gewünschtenfalls unter Verkohlung eines restlichen Teils des Materials (a) zu Pflanzenkohle (b), *die Vergasung* erfolgt, und die hierbei generierten heißen Verbrennungs-, Verkohlungs- und Pyrolysegase (c) dem zugeführten, pflanzlichen Material (a), insbesondere für dessen Vortrocknung und Vorwärmung, entgegen führbar sind, **dadurch gekennzeichnet,**
- **dass** die Anlage (100) mit einem schräg nach aufwärts gerichteten, rohrartigen Rohrreaktor (3) mit in demselben kontinuierlich rotierender, zumindest etwa ab dem Mittenbereich (M) des Rohrreaktors (3) nach aufwärts hin progressiv ansteigende Ganghöhen (g) aufweisender Förderschnecke (3a) mit Vorratsbehälter (3d) für das pflanzliche Material (a) und außenluft-dichter Eintragungsschleuse (1) an ihrem unteren Ende (31) gebildet ist,
- **dass** am oberen Ende (32) des Rohrreaktors (3), wo auch die Förderschnecke (3a) endet, eine in ihrem Inneren auf eine Temperatur von 350 bis 1000 °C gebrachte Verkohlungskammer (4) mit mittels der Förderschnecke (3a) mit vorerhitztem, getrocknetem und zumindest teil-pyrolysiertem Pflanzenmaterial (a') zu beaufschlagendem, schräg abwärts ausgerichtetem, für eine allseitige, Rundum-Verbrennungs- bzw. -Primärluftzufuhr zu dem Pflanzenmaterial (a') vorgesehenen, Rohrrost (4a), vorzugsweise mit quadratischem Querschnitt, mit Luftzufuhröffnungen (4b) anschließt,
- **dass** die in der Verkohlungskammer (4) gebildeten, heißen Verbrennungs- und Verkohlungsgase (c) zusammen mit den in der Pyrolysezone (II) des Rohrreaktors (3) gebildeten Pyrolysegasen (c1) über eine aus dem Rohrreaktor (3), etwa in dessen Mittenbereich (M) ausmündende Gasabführleitung (3e) durch das die Pyrolysezone (II) in Materialförderrichtung (R1) passierende, dort porös und körnig locker werdende, pyrolisierte Material (a'), in zur eben genannten Förderrichtung (R1) entgegengesetzter Richtung (R2) hindurch saugbar und einer jeweils gewünschten Weiterverwertung zuführbar sind, und
- **dass** gewünschtenfalls die in der Verkohlungskammer (4) generierte, fein- bis feinstkörnig anfallende, hochporöse Pflanzenkohle (b) über eine außenluft-dichte Austragsschleuse (5a) ausbringbar ist.

2. Anlage nach Anspruch 1, **dadurch gekennzeichnet, dass** die Förderschnecke (3a) für das pflanzliche Material (a, a') nur einseitig in einem am unteren Ende (31) des Rohrreaktors (3) angeordneten Getriebemotor (2) für ihren Antrieb gelagert ist, wobei vorzugsweise vorgesehen ist, dass die Förderschnecke (3a) einen nur bis in den Mittenbereich (M) derselben reichenden Kern (3b) aufweist.

3. Anlage nach Anspruch 1 oder 2, **dadurch gekennzeichnet, dass** der Rohrreaktor (3) in einem Winkel von 10 bis 20°C gegenüber der Horizontale schräg ansteigend angeordnet ist.

4. Anlage nach einem der Ansprüche 1 bis 3, **dadurch gekennzeichnet, dass** die gesamte Förderschnecke (3a) mit einem progressiv steigenden Ganghöhenverlauf zu ihrem oben liegenden Ende (32a) hin ausgebildet ist, wobei, insbesondere zur Vermeidung von Verstopfungen im Rohrreaktor (3), die Ganghöhe (g) vom unteren Ende (31a) der Förderschnecke (3a) bis zu deren oberen Ende (32a) hin in mehreren diskontinuierlichen Sprüngen um insgesamt 10 bis 25 % ansteigend ausgebildet ist.

5. Anlage nach einem der Ansprüche 1 bis 4, **dadurch gekennzeichnet, dass** die im Mittenbereich (M) des Rohrreaktors (3) aus demselben ausmündende Gasableitung (3e) mittels Unterdruck für das Ab- bzw. Ansaugen der Verbrennungs-, Verkohlungs- und Pyrolysegase (c, c1) durch das die Pyrolysezone (II) in Förderrichtung (R1) passierende und dort der Pyrolyse unterworfene, pflanzliche Material (a') hindurch in Gegenrichtung (R2) zur Förderrichtung (R1) ausgestattet ist.

6. Anlage nach Anspruch 5, **dadurch gekennzeichnet, dass** die in Gegenrichtung (R2) zur Förderrichtung (R1) des pflanzlichen Materials (a') strömenden bzw. geführten Verbrennungs-, Verkohlungs- und Pyrolysegase (c, c1) mittels des, insbesondere die Pyrolysezone (II) des Rohrreaktors (3) passierenden, als Biofilter wirksamen pflanzlichen Materials (a') kontinuierlich von feinsten Staub- und Ascheteilchen befreibar sind.

7. Anlage nach einem der Ansprüche 1 bis 6, **dadurch gekennzeichnet, dass** die in der Verkohlungszone (III) generierte, heiße Pflanzenkohle (b) in Folge des Nachschiebens des pyrolysierten, pflanzlichen Materials (a') mittels der Förderschnecke (3a) in Richtung (R1) zur Austragsschleuse (5a) hin transportierbar ist.

8. Anlage nach einem der Ansprüche 1 bis 7, **dadurch gekennzeichnet, dass** innerhalb des die Verkohlungszone (III) aufweisenden Raums ein Zusatzrost angeordnet ist, auf dem die in derselben generierte, heiße Pflanzenkohle (b) im Falle des ausschließlichen Bedarfs an den erzeugten Verbrennungs-, Verkohlungs- und Pyrolysegasen (c, c1) vollständig bis auf den Aschegehalt verbrennbar sind, wobei die Asche über die außenluft-dichte Austragsschleuse (5a) ausbringbar ist.

9. Anlage nach einem der Ansprüche 1 bis 7, **dadurch gekennzeichnet, dass** die die Verkohlungszone (III) nach abwärts hin verlassende, dort generierte, heiße Pflanzenkohle (b) nach Passieren einer außenluft-dichten Austragsschleuse (5a), insbesondere zu deren Ablöschung in einen mit Wasser beschickten Behälter austragbar ist.
